# EUROPÄISCHE PATENTSCHRIFT

(11) **EP 2 382 451 B1**
(45) Veröffentlichungstag und Bekanntmachung des Hinweises auf die Patenterteilung: **03.10.2012**
(21) Anmeldenummer: 09827030.9
(22) Anmeldetag: 23.12.2009
(51) Int. Cl.: G01G 3/18, G01G 11/00, G01G 21/30

(54) **FÖRDERBANDWAAGE**
CONVEYOR BELT SCALE
BALANCE POUR BANDE TRANSPORTEUSE

(30) Priorität: 23.01.2009 DE 202009000821 U; 22.04.2009 DE 202009005883 U
(43) Veröffentlichungstag der Anmeldung: 02.11.2011
(73) Patentinhaber: Futehally, Habib, Juhu, Mombai 400 049 (IN)
(72) Erfinder: Futehally, Habib, Juhu, Mombai 400 049 (IN)
(74) Vertreter: Meinke, Dabringhaus und Partner GbR
(86) Internationale Anmeldenummer: PCT/IB2009/008075
(87) Internationale Veröffentlichungsnummer: WO 2010/084378

(56) Entgegenhaltungen:
- US-A- 3 324 960
- US-A- 3 498 396
- US-A- 4 353 427
- US-A- 5 877 456

## Beschreibung

Die Erfindung richtet sich auf eine Förderbandwaage zum Transport und Wiegen von Schüttgut mit einer ein Gestänge beaufschlagenden Schwinge und einer mit dem Gestänge verbundenen Wägezelle.

Derartige Förderbandwaagen sind in unterschiedlichen Gestaltungen bekannt. So beispielsweise aus der DE 12 64 088 A oder DE 20 37 465 A, wobei andere Wägezellen-Lösungen beispielsweise der DE 19 19 368, der US 2 765 816, der US 3 324 960, der US 3 498 396, der US 4 353 427, der US 5 877 456 oder der US 2009/0090603 A1 zu entnehmen sind.

Beispielsweise in Kraftwerken, die fossile Brennstoffe, wie Braun- oder Steinkohle einsetzen, muss dieser Brennstoff möglichst genau dosiert den jeweiligen Brennern zugeführt werden, wozu u.a. gattungsgemäße Förderbandwaagen eingesetzt werden. Werden Stäube verbrannt, so ist ein Problem darin zu sehen, dass diese Stäube zu unkontrollierten Explosionen neigen, so dass viele der Elemente auch im Wege der Förderung druckfest gekapselt sind. Setzt man den druckfest gekapselten Gehäusen Wägezellen ein, so sind diese bei einem Schaden nur schwer zu erreichen.

Hier setzt die Erfindung an, deren Aufgabe darin besteht, eine derartige Förderbandwaage so auszugestalten, dass insbesondere auch die Wägezellen von außen erreichbar sind.

Mit einer Fördenbandwaage der eingangs bezeichneten Art wird diese Aufgabe gemäß der Erfindung dadurch gelöst, dass das Förderband von einem druckfesten, explosionsgeschützten Gehäuse umgeben ist, wobei das die Wägezelle beaufschlagende Gestänge über wenigstens ein elastisches Lager mit druckfester Dichtung aus dem Gehäuse geführt ist, wobei die Wägezelle außerhalb des Gehäuses positioniert ist.

Durch die Übertragung der die Wägezelle beaufschlagenden Bewegungen des jeweiligen Übertragungsgestänges nach außerhalb des druckfesten Gehäuses, gewährleistet, dass die Wägezelle jederzeit von außen erreichbar ist, ohne das druckfeste Gehäuse öffnen zu müssen.

Ein weiterer ganz erheblicher Vorteil der Erfindung besteht darin, dass die in der Regel sehr temperaturempfindliche Wägezelle nicht mehr im Bereich sehr hoher Temperaturen positioniert ist, so dass Messfehler weitestgehend vermieden werden.

In Ausgestaltung ist vorgesehen, dass das Gehäuse wenigstens im Bereich der Wägezelle zylindrisch ausgebildet ist, wobei das die Wägezelle beaufschlagende Gestänge tangential das Gehäuse durchsetzt und in zwei elastischen dichtenden Lagern geführt ist.

Ohne dass die Erfindung speziell auf das tangentiale Durchsetzen des die Wägezelle beaufschlagenden Gestänges beschränkt wäre, liegt eine Besonderheit der vorliegenden Erfindung insbesondere darin, dass dieses Gestänge sowohl die in der Regel oben liegende Wägezelle beaufschlagt, als auch nach unten aus einem entsprechenden Gehäuse geführt ist, um dort zu einer Druckkompensation herangezogen werden zu können, womit wiederum die Messgenauigkeit gegenüber bekannten Lösungen stark erhöht wird.

In einer abgewandelten Ausführungsform kann vorgesehen sein, dass das Gehäuse im Bereich der Wägezelle mit einem nach außen ragenden Ansatz versehen ist, der wenigstens zwei gegenüberliegende Seitenwände aufweist, in denen je ein von dem die Wägezelle beaufschlagenden Gestänge durchsetztes Diaphragma als druckfeste Dichtung positioniert ist.

Nach der Erfindung kann auch vorgesehen sein, dass die Schwinge einen von der Übertragungsstange durchsetzenden Ansatz aufweist, wobei die Übertragungsstange im Bereich des Ansatzes mit einem Außengewinde und der Ansatz mit einem korrespondierenden Innengewinde zur Justierung der Übertragungsstange versehen ist.

In weiterer Ausgestaltung ist nach der Erfindung vorgesehen, dass der das Förderband tragende Rahmen mit auf Schienen verfahrbaren Laufrollen ausgerüstet ist zum Einbringen und/oder Entnehmen des Förderbandes mit den zugeordneten Waageelementen aus dem druckfesten, explosionsgeschützten Gehäuse.

Vorteilhaft kann es auch sein, wenn die Antriebswalze des Förderandes mit einem Kupplungselement und der Antriebsmotor mit einem korrespondierenden Kupplungselement ausgerüstet ist zum werkzeugfreien Ein- bzw. Auskuppeln der Antriebswalze, wie dies die Erfindung ebenfalls vorsieht, wobei darüber hinaus auch vorgesehen sein kann, dass die Übertragungsstange zur Übertragung der Wiegeausschläge mit einer Trennkupplung ausgerüstet ist, wobei das Gehäuse mit einem Sichtfenster zur Überwachung des Kupplungsvorganges versehen ist.

Die Erfindung ist nachstehend anhand der Zeichnung beispielsweise näher erläutert. Diese zeigt in
- Fig. 1: eine vereinfachte räumliche.Darstellung einer erfindungsgemäßen Förderbandwaage mit druckfestem umgebenden Gehäuse,
- Fig. 2: ein abgewandeltes Ausführungsbeispiel eines Gehäuseansatzes mit Wägezelle sowie in

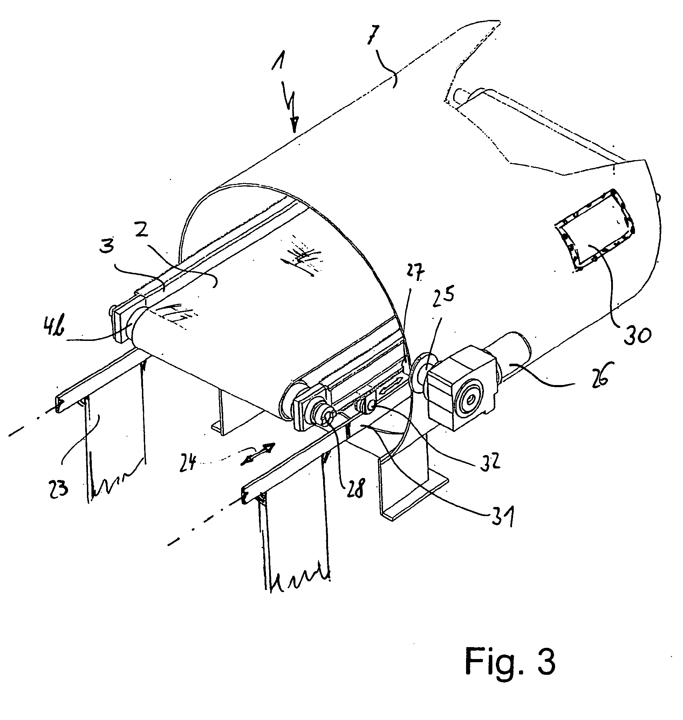

- Fig. 3: eine vereinfachte räumliche Darstellung der Förderbandwaage, teilweise aus dem Gehäuse herausgezogen.

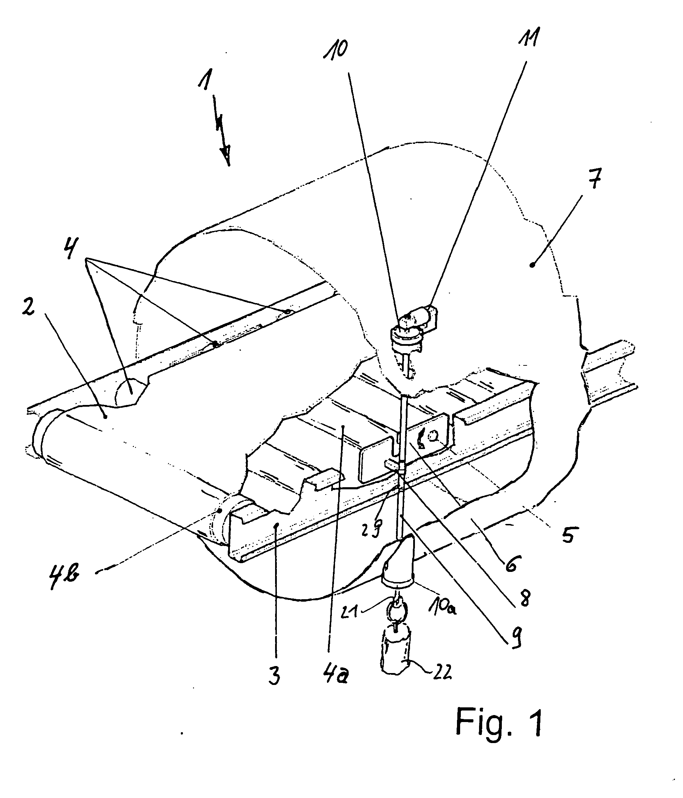

Die allgemein mit 1 bezeichnete Förderbandwaage wird von einem mit 2 bezeichneten Förderband gebildet, das eine Vielzahl von in einem Rahmen 3 gelagerten Rollen 4 getragen ist, wobei eine 4a bezeichnete Rolle eine um eine Schwenkachse 5 verschwenkbare Schwinge 6 beaufschlagt, die das Förderband 2 umlenkende, stirnseitige Rolle ist in Fig. 1 mit 4b bezeichnet. Das Förderband 2 ist von einem teilweise aufgebrochen wiedergegebenen druckfesten und explosionsgeschützten Gehäuse, allgemein mit 7 bezeichnet, umgeben.

An der Schwinge 6 ist ein mit 8 bezeichneter Ansatz fest verbunden, der eine zur Rolle 4a im Wesentlichen senkrecht positionierte Übertragungsstange 9 trägt, die über ein in Fig. 1 nicht näher dargestelltes Gewinde dort in ihrer Höhe verstellbar angeordnet ist.

Die Übertragungsstange 9 durchsetzt das in Fig. 1 zylindrische druckfeste Gehäuse 7 etwa tangential und wird durch ein oberes und unteres Lager, allgemein mit 10 bezeichnet, nach außen geführt, wobei im Bereich des oberen Lagers 10 eine in den Figuren nur angedeute Wägezelle 11 außerhalb des Gehäuses 7 positioniert ist. Am unteren Ende 9a weist die Übertragungsstange 9 einen Haken auf, um nicht näher dargestellte Elemente zur Druckkompensation befestigen zu können. Zur besseren Unterscheidung ist das der Wägezelle 11 zugeordnete Lager mit 10, das gegenüberliegende Lager mit 10a bezeichnet.

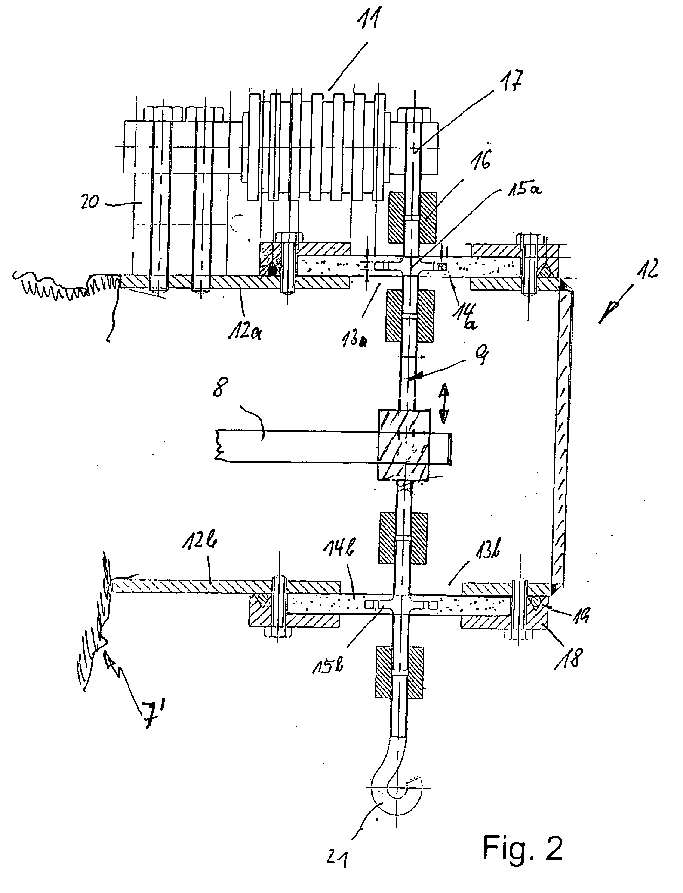

In Fig. 2 ist ein etwas abgewandeltes Ausführungsbeispiel der Erfindung als Schnitt dargestellt, wobei hier das nicht näher wiedergegebene druckfeste Gehäuse 7' mit einem kastenförmigen Ansatz, allgemein mit 12 bezeichnet, ausgerüstet ist, der zwei gegenüberliegende parallele Wandfläche 12a und 12b aufweist, die mit zwei Öffnungen 13a und 13b ausgerüstet sind.

Diese beiden Öffnungen 13a und 13b in den parallelen Wandbereichen 12a und 12b werden von je einem Diaphragma oder einem vergleichbaren elastischen und gleichzeitig dichtenden Element 14 verschlossen, in die je ein Gestängeelement 15a und 15b eingegossen ist, das mit nach außen und innen weisenden Gewindezapfen ausgerüstet ist. Mittels Überwurfmuttern 16 oder ähnlichen Verbindungselementen sind damit Gestängeelemente verschraubt, so die Verbindungsschraube 17 für die Wägezelle 11 und auch die Stange 9, die die Auslenkung des Ansatzes 8 an der in Fig. 2 nicht wiedergegebenen Schwinge überträgt. Die Diaphragmen 14a und 14b sind mittels Klemmringen 18 und Ringdichtungen 19 mit den Wandelementen 12a und 12b verschraubt, die Wägezelle 11 ist über einen Lagerbock 20 ebenfalls an einem der Wandelemente, in Fig. 2 mit 12a bezeichnet, befestigt.

In den Fig. 1 und 2 ist noch dargestellt, dass die aus dem Gehäuse herausgeführte Übertragungsstange 9 an ihrem unteren Ende mit einem Haken 21 versehen ist, an dem ein Kompensationsgewicht 22 angehängt werden kann, um die Wiegeeinrichtung insgesamt auszutarieren.

Die gesamte Bandware, soweit das Förderband 2 und die damit verbundenen Einrichtungen betroffen sind, aus dem druckfesten Gehäuse 7 nach Öffnen einer Schleusentür (nicht dargestellt) herausgezogen werden kann, und zwar auf ein nur andeutungsweise wiedergegebenes Gestell 23. Dieses Herausziehen und wieder in Position bringen ist mit einem Doppelpfeil 24 angedeutet.

Um ein einfaches Herausziehen, z.B. für Reparaturarbeiten zu ermöglichen, weist im Inneren des Druckgehäuses 7 der Abtrieb 25 des das Band 2 antreibenden Motors 26 ein Kupplungselement 27 auf, das mit einem entsprechenden Kupplungselement 28 an der Treibwalze 4b zusammenwirkt.

Im Bereich des die Schwingungen auf die Messeinrichtung übertragenden Hebelarmes ist an der Übertragungsstange 9 ebenfalls ein doppeltes Kupplungselement 29 vorgesehen, wobei das Kuppeln und Entkuppeln über beispielsweise eine druckfeste Scheibe 30 im Gehäuse 7 beobachtet werden kann.

Natürlich ist das beschriebene Ausführungsbeispiel der Erfindung noch in vielfacher Hinsicht abzuändern, ohne den Grundgedanken zu verlassen. So ist die Erfindung insbesondere nicht auf die Art der Gestaltung des Gestänges beschränkt, ebenso nicht auf die Positionierung der Wägezelle relativ zum Gehäuse, das Diaphragma 14 kann als eine lineare Bewegung übertragender dichtender Balken ausgebildet sein u. dgl. mehr.

## Patentansprüche

1. Förderbandwaage (1) zum Transport und Wiegen von Schüttgut mit einer ein Gestänge (9) beaufschlagenden Schwinge (6) und einer mit dem Gestänge (9) verbundenen Wägezelle (11),
**dadurch gekennzeichnet,**
**dass** das Förderband (2) von einem druckfesten, explosionsschützenden Gehäuse (7) umgeben ist, wobei das die Wägezelle (11) beaufschlagende Gestänge (9) über wenigstens ein elastisches Lager (10) mit druckfester Dichtung aus dem Gehäuse (7) geführt ist, wobei die Wägezelle (11) außerhalb des Gehäuses (7) positioniert ist.

2. Förderbandwaage nach Anspruch 1,
**dadurch gekennzeichnet,**
**dass** das Gehäuse (7) wenigstens im Bereich der Wägezelle (11) zylindrische ausgebildet ist, wobei das die Wägezelle (11) beaufschlagende Stange (9) tangential das Gehäuse (7) durchsetzt und in zwei elastisch dichtenden Lagern (10,10a) geführt ist.

3. Förderbandwaage nach Anspruch 1,
**dadurch gekennzeichnet,**
**dass** das Gehäuse (7) im Bereich der Wägezelle (11) mit einem nach außen ragenden Ansatz (12) versehen ist, der wenigstens zwei gegenüberliegende parallele Seitenwände (12a,12b) aufweist, in denen je ein von dem die Wägezelle (11) beaufschlagenden Gestänge (9) durchsetztes Diaphragma (14a,14b) als druckfeste Dichtung positioniert ist.

4. Förderbandwaage nach einem der vorangehenden Ansprüche,
**dadurch gekennzeichnet,**
**dass** die Schwinge (6) einen von der Übertragungsstange durchsetzten Ansatz aufweist, wobei die Übertragungsstange
im Bereich des Ansatzes mit einem Außengewinde und der Ansatz (8) mit einem korrespondierenden Innengewinde zur Justierung der Übertragungsstange (9) versehen ist.

5. Förderbandwaage nach einem der vorangehenden Ansprüche,
**dadurch gekennzeichnet,**
**dass** der das Förderband (2) tragende Rahmen (3) mit auf Schienen (31) verfahrbaren Laufrollen (32) ausgerüstet ist zum Einbringen und/oder Entnehmen des Förderbandes (2) mit den zugeordneten Waageelementen aus dem druckfesten, explosionsgeschützten Gehäuse (7).

6. Förderbandwaage nach einem der vorangehenden Ansprüche,
**dadurch gekennzeichnet,**
**dass** die Antriebswalze (4b) des Förderandes (2) mit einem Kupplungselement (28) und der Antriebsmotor (26) mit einem korrespondierenden Kupplungselement (27) ausgerüstet ist zum werkzeugfreien Ein- bzw. Auskuppeln der Antriebswalze (4b).

7. Förderbandwaage nach einem der vorangehenden Ansprüche,
**dadurch gekennzeichnet,**
**dass** die Übertragungsstange (9) zur Übertragung der wiegeausschläge mit einer Trennkupplung (29) ausgerüstet ist, wobei das Gehäuse (7) mit einem Sichtfenster (30) zur Überwachung des Kupplungsvorganges versehen ist.

## Claims

1. Conveyor belt scales (1) for transporting and weighing bulk material, comprising a rocker (6) which acts on a rod assembly (9) and comprising a weighing cell (11) connected to the rod assembly (9), **characterised in that** the conveyor belt (2) is surrounded by a pressure-resistant, explosion-protective housing (7), the rod assembly (9) which acts on the weighing cell (11) being guided out of the housing (7) via at least one resilient bearing (10) having a pressure-resistant seal, the weighing cell (11) being positioned outside the housing (7).

2. Conveyor belt scales according to claim 1, **characterised in that** the housing (7) is cylindrical at least in the region of the weighing cell (11), the rod (9) which acts on the weighing cell (11) passing through the housing (7) tangentially and being guided in two resiliently sealing bearings (10, 10a).

3. Conveyor belt scales according to claim 1, **characterised in that**, in the region of the weighing cell (11), the housing (7) is provided with an outwardly projecting attachment (12) which has at least two parallel side walls (12a, 12b) which lie opposite one another, in which a diaphragm (14a, 14b), through which the rod assembly (9) which acts on the weighing cell (11) passes, is positioned as a pressure-resistant seal.

4. Conveyor belt scales according to any of the preceding claims, **characterised in that** the rocker (6) comprises an attachment through which the transfer rod passes, the transfer rod being provided with an external thread in the region of the attachment and the attachment (8) being provided with a corresponding internal thread for adjusting the transfer rod (9).

5. Conveyor belt scales according to any of the preceding claims, **characterised in that** the frame (3) which carries the conveyor belt (2) is equipped with wheels (32) that can run on rails (31) for introducing the conveyor belt (2) together with the associated scale elements into the pressure-resistant, explosion-protective housing (7) and/or removing said belt therefrom.

6. Conveyor belt scales according to any of the preceding claims, **characterised in that** the drive roller (4b) of the conveyor belt (2) is equipped with a coupling element (28) and the drive motor (26) is equipped with a corresponding coupling element (27) for tool-free coupling and decoupling of the drive roller (4b).

7. Conveyor belt scales according to any of the preceding claims, **characterised in that** the transfer rod (9) for transferring the weight-related movements is equipped with a separation coupling (29), the housing (7) being provided with a viewing window (30) for monitoring the coupling process.

## Revendications

1. Balance pour bande transporteuse (1) pour le transport et le pesage de marchandise en vrac avec une coulisse (6) alimentant une tige (9) et une cellule de pesage (11) reliée à la tige (9),
**caractérisée en ce que**
la bande transporteuse (2) est entourée par un boîtier (7) résistant à la pression et protégeant des explosions, dans laquelle la tige (9) alimentant la cellule de pesage (11) est guidée hors du boîtier (7) via au moins un support élastique (10) avec un joint d'étanchéité résistant à la pression, la cellule de pesage (11) étant positionnée à l'extérieur du boîtier (7).

2. Balance pour bande transporteuse selon la revendication 1,
**caractérisée en ce que**
le boîtier (7) a une forme cylindrique au moins dans la zone de la cellule de pesage (11), la tige (9) alimentant la cellule de pesage (11) traversant tangentiellement le boîtier (7) et étant guidée dans deux paliers étanches de manière élastique (10, 10a).

3. Balance pour bande transporteuse selon la revendication 1,
**caractérisée en ce que**
le boîtier (7) est pourvu, dans la zone de la cellule de pesage (11), d'une butée saillant vers l'extérieur (12), qui présente au moins deux parois latérales (12a, 12b) parallèles et en regard l'une de l'autre, dans lesquelles, respectivement, un diaphragme (14a, 14b) traversé par la tige (9) alimentant la cellule de pesage (11) est positionné comme joint étanche résistant à la pression.

4. Balance pour bande transporteuse selon l'une quelconque des revendications précédentes,
**caractérisée en ce que**
la coulisse (6) présente une butée traversée par la tige de transmission, la tige de transmission étant pourvue, dans la zone de la butée, d'un filet externe et la butée (8) étant elle-même dotée d'un filet interne correspondant pour régler la tige de transmission (9).

5. Balance pour bande transporteuse selon l'une quelconque des revendications précédentes,
**caractérisée en ce que**
le châssis (3) portant la bande transporteuse (2) est équipé de rouleaux de roulement (32) susceptibles de circuler sur des rails (31) pour insérer la bande transporteuse (2) avec les éléments de pesage qui lui sont affectés dans le boîtier (7) résistant à la pression et protégeant des explosions et l'en retirer.

6. Balance pour bande transporteuse selon l'une quelconque des revendications précédentes,
**caractérisée en ce que**
le cylindre d'entraînement (4b) de la bande transporteuse (2) est équipé d'un élément d'accouplement (28) et le moteur d'entraînement (26) d'un élément d'accouplement correspondant (27) pour établir un accouplement ou un désaccouplement du cylindre d'entraînement sans outil (4b).

7. Balance pour bande transporteuse selon l'une quelconque des revendications précédentes,
**caractérisée en ce que**
la tige de transmission (9) est équipée, pour transférer les indications de pesage, d'un accouplement de séparation (29), le boîtier (7) étant pour sa part pourvu d'une fenêtre d'observation (30) pour contrôler l'opération d'accouplement.
